(19) Europäisches Patentamt
European Patent Office
Office européen des brevets

(11) EP 3 912 831 B1

# (12) EUROPEAN PATENT SPECIFICATION

(45) Date of publication and mention of the grant of the patent:
**13.09.2023 Bulletin 2023/37**

(21) Application number: **20752088.3**

(22) Date of filing: **30.01.2020**

(51) International Patent Classification (IPC):
***B60C 1/00*** (2006.01) ***C08K 5/098*** (2006.01)
***C08K 5/14*** (2006.01) ***C08K 5/372*** (2006.01)
***C08L 53/02*** (2006.01) ***C08K 3/04*** (2006.01)
***C08L 23/08*** (2006.01)

(52) Cooperative Patent Classification (CPC):
(C-Sets available)
**B60C 1/00; B60C 1/0016; C08L 23/0838; C08L 53/025;** C08K 5/098; C08K 5/14 (Cont.)

(86) International application number:
**PCT/JP2020/003369**

(87) International publication number:
**WO 2020/162304 (13.08.2020 Gazette 2020/33)**

## (54) RUBBER COMPOSITION AND TIRE

KAUTSCHUKZUSAMMENSETZUNG UND REIFEN

COMPOSITION DE CAOUTCHOUC, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2019 JP 2019018870**

(43) Date of publication of application:
**24.11.2021 Bulletin 2021/47**

(73) Proprietor: **Sumitomo Rubber Industries, Ltd.**
**Kobe-shi, Hyogo 651-0072 (JP)**

(72) Inventors:
- **KITAO, Ayaka**
  **Kobe-shi, Hyogo 651-0072 (JP)**
- **YOKOYAMA, Yuka**
  **Kobe-shi, Hyogo 651-0072 (JP)**
- **SATO, Daisuke**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**WO-A1-2015/156289**
**JP-A- S6 160 739**
**JP-A- H08 269 244**
**JP-A- H09 328 533**
**JP-A- 2003 133 179**
**JP-A- 2003 147 160**
**JP-A- 2004 238 474**
**JP-A- 2005 133 021**
**JP-A- 2005 220 313**
**JP-A- 2014 105 293**
**JP-A- 2019 014 796**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0838, C08L 53/025, C08K 5/372;**
**C08L 53/025, C08L 23/0838, C08K 5/372**

## Description

### TECHNICAL FIELD

The present invention relates to a tire comprising a tire component comprising a rubber composition.

### BACKGROUND ART

Tire rubber compositions require various properties. These days, particularly from the standpoint of environmental compatibility, durability-related properties such as abrasion resistance, ozone resistance, and fracture resistance have been emphasized to ensure safe and long use. At the same time, properties such as processability for efficient production of tires and handling stability for safe operation are also required.

For example, fracture resistance and handling stability may be enhanced by incorporating a large amount of reinforcing materials such as carbon black and silica, but this technique has the disadvantage of significantly reducing processability. In order to enhance ozone resistance, it is common to incorporate waxes or antioxidants. However, these chemicals also have the drawback that their effect would be quickly lost due to degradation or removal over time.

### CITATION LIST

### PATENT LITERATURE

Patent Literature 1: JP 2014-506277 T
Patent literature 2: JP2005220313 A discloses a tire rubber composition which comprises an aromatic vinyl-diene-olefin copolymer.
Patent literature 3: JP2014105293 A discloses a tire rubber composition which comprises an aromatic vinyl-diene block copolymer.

### SUMMARY OF INVENTION

### TECHNICAL PROBLEM

In recent years, it has been proposed to use in tire applications so-called thermoplastic elastomers (TPE), rather than conventional and common diene rubbers (for example, Patent Literature 1). However, such tires formed from TPE tend to have inferior handling stability and fracture resistance, and further improvement is needed. Another known technique is to incorporate diene rubbers with TPE as an alternative to fillers or plasticizers. However, disadvantageously, this greatly reduces fracture resistance and abrasion resistance due to the incompatibility between the diene rubbers and TPE.

The present invention aims to solve the above problems and provide tires having improved overall performance in terms of processability, ozone resistance, handling stability, abrasion resistance, and fracture resistance.

### SOLUTION TO PROBLEM

The present invention relates to a tire, comprising a tire component comprising a rubber composition, the rubber composition comprising

at least one aromatic vinyl-diene-olefin copolymer A having an aromatic vinyl content of 1 to 45% by mass, a diene content of 0.1 to 50% by mass, and an olefin content of 30 to 90% by mass; and
at least one aromatic vinyl-diene block copolymer B.

Preferably, the copolymer A is at least one aromatic vinyl-diene-olefin copolymer having an aromatic vinyl content of 1 to 45% by mass, a butadiene content of 0.1 to 50% by mass, and a combined content of ethylene and butylene of 30 to 90% by mass,

the copolymer B is at least one styrene-butadiene block copolymer,
the at least one copolymer B is present in an amount of 5 to 100 parts by mass per 100 parts by mass of the at least one copolymer A, and

the rubber compositions contain, based on 100% by mass of rubber components therein, 40 to 100% by mass in total of the copolymers A and B.

Preferably, the styrene-butadiene block copolymer has a degree of hydrogenation of a butadiene portion of 50 to 99% by mass.

Preferably, a backbone and/or chain end of the styrene-butadiene block copolymer is modified.

Preferably, the styrene-butadiene block copolymer is at least one tetramer obtained by condensation of a styrene-butadiene diblock copolymer.

Preferably, a backbone and/or chain end of the copolymer A is modified.

Preferably, the rubber compositions contain at least one crosslinking agent selected from the group consisting of organic peroxides, compounds represented by the following formula (1), and alkylphenol/sulfur chloride condensates,

$$R^1\text{-S-S-A-S-S-}R^2 \qquad (1)$$

wherein A represents a C2-C10 alkylene group, and $R^1$ and $R^2$ are the same as or different from each other and each represent a nitrogen atom-containing monovalent organic group.

Preferably, the rubber compositions contain at least one metal carboxylate.

Preferably, the metal carboxylate is formed of:

at least one carboxylic acid selected from the group consisting of methacrylic acid, ethacrynic acid, acrylic acid, cinnamic acid, crotonic acid, maleic acid, fumaric acid, and itaconic acid; and
at least one metal selected from the group consisting of sodium, potassium, iron, magnesium, calcium, zinc, barium, aluminum, tin, zirconium, lithium, cadmium, and cobalt.

Preferably, a vinyl unit content based on 100% by mass in total of butadiene units of the copolymers A and B is 30% by mass or less, more preferably 20% by mass or less.

Preferably, the rubber compositions contain, based on 100% by mass of rubber components therein, 80 to 100% by mass in total of the copolymers A and B.

Preferably, the rubber compositions contain, per 100 parts by mass of rubber components therein, 0.5 to 500 parts by mass of at least one inorganic filler.

Preferably, the rubber compositions contain, per 100 parts by mass of rubber components therein, 0.5 to 100 parts by mass of at least one carbon black.

Preferably, the rubber compositions contain substantially no white filler.

Preferably, the rubber compositions contain, per 100 parts by mass of rubber components therein, 0.5 to 200 parts by mass of at least one plasticizer.

Preferably, the rubber compositions contain, per 100 parts by mass of rubber components therein, 0 to 10 parts by mass of at least one plasticizer.

Preferably, the copolymer B has an aromatic vinyl content of 10 to 70% by mass.

Preferably, the rubber compositions are for use in tires.

The present invention also relates to tires, including a tire component including any of the above rubber compositions.

Preferably, the tire component is a tread.

## ADVANTAGEOUS EFFECTS OF INVENTION

The tire of the present invention comprises a tire component comprising a rubber composition which comprises at least one aromatic vinyl-diene-olefin copolymer A having an aromatic vinyl content of 1 to 45% by mass, a diene content of 0.1 to 50% by mass, and an olefin content of 30 to 90% by mass, and at least one aromatic vinyl-diene block copolymer B. Such tire has improved overall performance in terms of processability, ozone resistance, handling stability, abrasion resistance, and fracture resistance.

## DESCRIPTION OF EMBODIMENTS

The tire of the present invention comprises a tire component comprising a rubber composition which comprises at least one aromatic vinyl-diene-olefin copolymer A having an aromatic vinyl content of 1 to 45% by mass, a diene content of 0.1 to 50% by mass, and an olefin content of 30 to 90% by mass, and at least one aromatic vinyl-diene block copolymer B. Thus, the tire has improved overall performance in terms of processability, ozone resistance, handling stability, abrasion resistance, and fracture resistance.

The tire provides the above-mentioned advantageous effect. The reason for this advantageous effect is not exactly clear, but is believed to be as follows.

The aromatic vinyl-diene-olefin copolymer A, which has a small number of unsaturated bonds, provides good ozone resistance and fracture resistance. Moreover, since the aromatic vinyl-diene-olefin copolymer A containing an olefin-based structural unit is combined with the aromatic vinyl-diene block copolymer B having a block structure, it is believed that both polymers have high affinity for each other and form a strong interface between the polymers, and therefore both copolymers A and B exhibit their properties without impairing the high elastic modulus and high hardness of the copolymer B and the moderate rubber elasticity of the copolymer A, thus providing improved overall performance in terms of processability, ozone resistance, handling stability, abrasion resistance, and fracture resistance. Accordingly, the combined use of the aromatic vinyl-diene-olefin copolymer A and the aromatic vinyl-diene block copolymer B can synergistically improve overall performance in terms of processability, ozone resistance, handling stability, abrasion resistance, and fracture resistance.

The aromatic vinyl-diene-olefin copolymer A has an aromatic vinyl content of 1 to 45% by mass, a diene content of 0.1 to 50% by mass, and an olefin content of 30 to 900 by mass.

The aromatic vinyl-diene-olefin copolymer A (preferably random copolymer) may be produced by copolymerizing the monomer components or by hydrogenating part of the diene portion of an aromatic vinyl-diene copolymer to form an olefin structure. In one embodiment of the present invention, the aromatic vinyl-diene-olefin copolymer A is at least one copolymer (preferably random copolymer) obtained by copolymerizing an aromatic vinyl monomer, a diene monomer (conjugated diene monomer), and an olefin monomer. The aromatic vinyl-diene-olefin copolymer A may also be at least one polymer obtained by copolymerizing an aromatic vinyl monomer and a diene monomer (conjugated diene monomer) and partially hydrogenating the resulting copolymer (preferably random copolymer). The aromatic vinyl-diene-olefin copolymer A may contain structural units other than the above monomers. The aromatic vinyl-diene-olefin copolymer A may be a single copolymer or a combination of two or more copolymers. The aromatic vinyl-diene-olefin copolymer A may be produced by any method, e.g., as described in JP 4088258 B.

Examples of the aromatic vinyl monomer used in the aromatic vinyl-diene-olefin copolymer A include styrene, $\alpha$-methylstyrene, vinyltoluene, vinylnaphthalene, divinylbenzene, trivinylbenzene, and divinylnaphthalene. Each of these may be used alone, or two or more of these may be used in combination. Styrene is preferred among these.

Examples of the diene monomer (conjugated diene monomer) used in the aromatic vinyl-diene-olefin copolymer A include 1,3-butadiene, isoprene, 1,3-pentanediene, 2,3-dimethylbutadiene, and 2-phenyl-1,3-butadiene. Each of these may be used alone, or two or more of these may be used in combination. 1,3-Butadiene is preferred among these.

Examples of the olefin monomer used in the aromatic vinyl-diene-olefin copolymer A include olefins such as ethylene, propylene, 1-butylene, 2-butylene, isobutene, 1-hexene, 1-octene, 1-heptene, and 1-decene. Each of these may be used alone, or two or more of these may be used in combination. 1-Butylene, 2-butylene, and ethylene are preferred among these, with ethylene being more preferred.

The aromatic vinyl-diene-olefin copolymer A is preferably at least one styrene-butadiene-ethylene copolymer.

The aromatic vinyl content (preferably styrene content) of the aromatic vinyl-diene-olefin copolymer A is 1% by mass or higher, preferably 5% by mass or higher, more preferably 10% by mass or higher, still more preferably 150 by mass or higher, particularly preferably 20% by mass or higher, most preferably 25% by mass or higher, but is 450 by mass or lower, preferably 40% by mass or lower. When the content is within the range indicated above, the advantageous effect can be more suitably achieved.

The diene content (preferably conjugated diene content, more preferably butadiene content) of the aromatic vinyl-diene-olefin copolymer A is 0.1% by mass or higher, preferably 0.2% by mass or higher, more preferably 0.3% by mass or higher, still more preferably 0.5% by mass or higher, particularly preferably 3% by mass or higher, but is 50% by mass or lower, preferably 45% by mass or lower, more preferably 40% by mass or lower, still more preferably 35% by mass or lower, particularly preferably 30% by mass or lower, most preferably 25% by mass or lower, further most preferably 20% by mass or lower, further most preferably 15% by mass or lower, further most preferably 10% by mass or lower, further most preferably 8% by mass or lower. When the content is within the range indicated above, the advantageous effect can be more suitably achieved.

The olefin content (preferably combined content of ethylene and butylene, more preferably ethylene content) of the aromatic vinyl-diene-olefin copolymer A is 30% by mass or higher, preferably 35% by mass or higher, more preferably 40% by mass or higher, still more preferably 450 by mass or higher, particularly preferably 50% by mass or higher, but is 90% by mass or lower, preferably 85% by mass or lower, more preferably 80% by mass or lower, still more preferably 75% by mass or lower. When the content is within the range indicated above, the advantageous effect can be more suitably achieved.

The sum of the aromatic vinyl content (preferably styrene content), diene content (preferably conjugated diene content, more preferably butadiene content), and olefin content (preferably combined content of ethylene and butylene, more preferably ethylene content) each based on 100% by mass of the aromatic vinyl-diene-olefin copolymer A is preferably 80% by mass or higher, more preferably 90% by mass or higher, still more preferably 95% by mass or higher,

and may be 100% by mass. When the sum is within the range indicated above, the advantageous effect can be more suitably achieved.

The amount of the components having a vinyl structure based on 100% by mass of the components derived from conjugated diene monomers of the aromatic vinyl-diene-olefin copolymer A is preferably 20% by mass or less, more preferably 10% by mass or less, still more preferably 3% by mass or less, and may be 0% by mass. When the amount is within the range indicated above, the advantageous effect (in particular, ozone resistance, fracture resistance) can be more suitably achieved.

The weight average molecular weight (Mw) of the aromatic vinyl-diene-olefin copolymer A is preferably 4,000 or more, more preferably 10,000 or more, still more preferably 50,000 or more, particularly preferably 100,000 or more, most preferably 150,000 or more. The upper limit of the Mw is not limited, but it is preferably 1,000,000 or less, more preferably 800,000 or less, still more preferably 300,000 or less. When the Mw is within the range indicated above, the advantageous effect can be more suitably achieved.

The backbone and/or chain end of the aromatic vinyl-diene-olefin copolymer A may be modified.

The modified copolymer may be any copolymer having a functional group (polar group) interactive with a filler such as silica. Examples include a chain end-modified copolymer obtained by modifying at least one chain end of a copolymer with a compound (modifier) having the functional group (i.e., a chain end-modified copolymer terminated with the functional group); a backbone-modified copolymer having the functional group in the backbone; a backbone- and chain end-modified copolymer having the functional group in both the backbone and chain end (e.g., a backbone- and chain end-modified copolymer in which the backbone has the functional group and at least one chain end is modified with the modifier); and a chain end-modified copolymer that has been modified (coupled) with a polyfunctional compound having two or more epoxy groups in the molecule so that a hydroxy or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may have a substituent. Amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amide groups are preferred among these.

The amount of the at least one aromatic vinyl-diene-olefin copolymer A based on 100% by mass of the rubber components is preferably 1% by mass or more, more preferably 5% by mass or more, still more preferably 20% by mass or more, particularly preferably 30% by mass or more, most preferably 40% by mass or more, further most preferably 50% by mass or more, but is preferably 99% by mass or less, more preferably 95% by mass or less, still more preferably 90% by mass or less, particularly preferably 85% by mass or less. When the amount is within the range indicated above, the advantageous effect can be more suitably achieved.

The aromatic vinyl-diene block copolymer B is at least one block copolymer including a block segment consisting of aromatic vinyl monomer units and a block segment consisting of diene monomer (conjugated diene monomer) units. The aromatic vinyl-diene block copolymer B may contain structural units other than the above monomers. The aromatic vinyl-diene block copolymer B may be a single copolymer or a combination of two or more copolymers.

The aromatic vinyl monomer and diene monomer (conjugated diene monomer) and suitable embodiments thereof are as described for the aromatic vinyl-diene-olefin copolymer A.

Specific examples of the aromatic vinyl-diene block copolymer B include block copolymers of styrene and butadiene and/or isoprene (preferably butadiene), with styrene-butadiene block copolymers being preferred. Styrene-butadiene diblock copolymers (SB), styrene-butadiene-styrene triblock copolymers (SBS), and styrene-butadiene-styrene-butadiene tetrablock copolymers (SBSB), and hydrogenated products thereof are particularly suitable among these. When the copolymers are hydrogenated, the number of unsaturated bonds in the butadiene units is reduced, and part of or all the butadiene units are converted to ethylene units. For example, styrene-butadiene-styrene triblock copolymers (SBS) are hydrogenated into styrene-hydrogenated butadiene-styrene triblock copolymers (SEBS).

The aromatic vinyl-diene block copolymer B may be produced by any method, e.g., as described in JP 2014-105293 A, JP 2014-105238 A, or JP 2014-133845 A.

The aromatic vinyl-diene block copolymer B preferably has a block structure with three or more consecutive styrene units on average.

The aromatic vinyl content (preferably styrene content) of the aromatic vinyl-diene block copolymer B is preferably 5% by mass or higher, more preferably 10% by mass or higher, still more preferably 15% by mass or higher, particularly preferably 20% by mass or higher, but is preferably 70% by mass or lower, more preferably 60% by mass or lower, still more preferably 50% by mass or lower, particularly preferably 40% by mass or lower, most preferably 35% by mass or lower. When the content is within the range indicated above, the advantageous effect (in particular in improving handling stability and abrasion resistance) can be more suitably achieved.

The diene content (preferably conjugated diene content, more preferably butadiene content) of the aromatic

vinyl-diene block copolymer B is preferably 5% by mass or higher, more preferably 30% by mass or higher, still more preferably 40% by mass or higher, particularly preferably 50% by mass or higher, most preferably 60% by mass or higher, further most preferably 65% by mass or higher, but is preferably 95% by mass or lower, more preferably 90% by mass or lower, still more preferably 85% by mass or lower, particularly preferably 80% by mass or lower. When the content is within the range indicated above, the advantageous effect can be more suitably achieved.

Here, the diene content of the aromatic vinyl-diene block copolymer B also includes the amount of hydrogenated diene units. Specifically, it refers to the diene content before hydrogenation when the aromatic vinyl-diene block copolymer B is hydrogenated.

The sum of the aromatic vinyl content (preferably styrene content) and the diene content (preferably conjugated diene content, more preferably butadiene content) each based on 100% by mass of the aromatic vinyl-diene block copolymer B is preferably 80% by mass or higher, more preferably 90% by mass or higher, still more preferably 95% by mass or higher, and may be 100% by mass. When the sum is within the range indicated above, the advantageous effect can be more suitably achieved.

The amount of the block structural units based on 100% by mass of the aromatic vinyl-diene block copolymer B is preferably 80% by mass or more, more preferably 90% by mass or more, still more preferably 95% by mass or more, and may be 100% by mass. When the amount is within the range indicated above, the advantageous effect (in particular in improving processability and handling stability) can be more suitably achieved.

The amount of the components having a vinyl structure based on 100% by mass of the components derived from conjugated diene monomers of the aromatic vinyl-diene block copolymer B is preferably 40% by mass or less, more preferably 30% by mass or less, still more preferably 200 by mass or less, further preferably 10% by mass or less, and may be 0% by mass. When the amount is within the range indicated above, the advantageous effect (in particular in improving ozone resistance) can be more suitably achieved.

The amount of the components having a vinyl structure (vinyl unit content) based on 100% by mass in total of the components (preferably butadiene units) derived from conjugated diene monomers of the aromatic vinyl-diene-olefin copolymer A and the aromatic vinyl-diene block copolymer B is preferably 40% by mass or less, more preferably 30% by mass or less, still more preferably 200 by mass or less, particularly preferably 10% by mass or less, most preferably 5% by mass or less, and may be 0% by mass. When the amount is within the range indicated above, the advantageous effect can be more suitably achieved.

The weight average molecular weight (Mw) of the aromatic vinyl-diene block copolymer B is preferably 4,000 or more, more preferably 10,000 or more, still more preferably 50,000 or more, particularly preferably 100,000 or more, most preferably 150,000 or more. The upper limit of the Mw is not limited, but it is preferably 1,000,000 or less, more preferably 800,000 or less, still more preferably 300,000 or less. When the Mw is within the range indicated above, the advantageous effect (in particular in improving processability) can be more suitably achieved.

As described earlier, the aromatic vinyl-diene block copolymer B (preferably styrene-butadiene block copolymer) may be hydrogenated.

In other words, the rubber compositions may contain at least one hydrogenated copolymer B in which part of the diene units (preferably butadiene units) of the copolymer B are hydrogenated. The hydrogenated copolymer B has enhanced affinity for plasticizers due to the reduced number of double bonds as a result of hydrogenation, and also may form a uniform crosslinked structure due to the decrease in sites reactive with crosslinking agents. These effects lead to further improved abrasion resistance, fracture resistance, and ozone resistance.

The degree of hydrogenation of the diene portion (preferably butadiene portion) of the aromatic vinyl-diene block copolymer B (preferably styrene-butadiene block copolymer) is preferably 50% by mass or more, more preferably 70% by mass or more, still more preferably 800 by mass or more, but is preferably 99% by mass or less, more preferably 98% by mass or less. When the degree of hydrogenation is within the range indicated above, the advantageous effect can be more suitably achieved.

It should be noted that the degree of hydrogenation refers to the percentage of the hydrogenated units based on 100% by mass of the diene units (preferably butadiene units) and may be calculated from the rate of decrease in the unsaturated bond signals in the $^1$H-NMR spectrum measured.

The hydrogenation may be performed by any method under any conditions, including known methods and known conditions. Specific examples include the use of hydrogenation catalysts described in, for example, JP H1-275605 A, JP H5-271326 A, JP H5-271325 A, JP H5-222115 A, JP H11-292924 A, JP 2000-37632 A, JP S59-133203 A, JP S63-5401 A, JP S62-218403 A, JP H7-90017 A, JP S43-19960 B, and JP S47-40473 B. Each of these hydrogenation catalysts may be used alone, or two or more of these may be used in combination.

The iodine number of the aromatic vinyl-diene block copolymer B is preferably 3 or larger, more preferably 7 or larger, still more preferably 15 or larger, particularly preferably 25 or larger, but is preferably 150 or smaller, more preferably 120 or smaller, still more preferably 100 or smaller, particularly preferably 80 or smaller. When the iodine number is within the range indicated above, the advantageous effect can be more suitably achieved.

Herein, the iodine number is measured in accordance with JIS K0070:1992.

The backbone and/or chain end of the aromatic vinyl-diene block copolymer B (preferably styrene-butadiene block copolymer) may be modified. With the modified aromatic vinyl-diene block copolymer B, the advantageous effect (in particular, abrasion resistance, fracture resistance) can be more suitably achieved.

Examples of the modified copolymer include those into which the above-mentioned functional groups are introduced. Preferred embodiments are as described for the aromatic vinyl-diene-olefin copolymer A.

The aromatic vinyl-diene block copolymer B (preferably styrene-butadiene block copolymer, more preferably SB) is also preferably at least one coupled copolymer obtained by coupling (condensation) using a coupling agent. The coupled copolymer B has enhanced compatibility with the copolymer A, so that the advantageous effect can be more suitably achieved. Examples of the coupled copolymer include dimers, trimers, and tetramers, with tetramers being preferred. Particularly preferred are tetramers obtained by condensation of styrene-butadiene diblock copolymers. These may be used alone or in combinations of two or more.

Moreover, the coupled copolymers in which the diene blocks (preferably butadiene blocks) are coupled are preferred.

Examples of the coupling agent include metal halides, alkoxysilanes, and halogenated silanes. Halogenated silanes are preferred for quantitative reaction, with silicon tetrachloride being more preferred.

The degree of coupling of the aromatic vinyl-diene block copolymer B (preferably styrene-butadiene block copolymer, more preferably SB) is preferably 200 or more, more preferably 300 or more, still more preferably 400 or more, particularly preferably 50% or more, most preferably 60% or more, but is preferably 950 or less, more preferably 90% or less, still more preferably 850 or less. When the degree of coupling is within the range indicated above, the advantageous effect can be more suitably achieved.

The degree of coupling can be determined from the molecular weight distribution curve measured by gel permeation chromatography (GPC). Specifically, it may be determined by subtracting the peak areas of low-molecular-weight components (uncoupled polymers) from the total peak area (= 100%) of the molecular weight distribution curve.

The amount of the at least one aromatic vinyl-diene block copolymer B based on 100% by mass of the rubber components is preferably 1% by mass or more, more preferably 5% by mass or more, still more preferably 10% by mass or more, particularly preferably 15% by mass or more, but is preferably 99% by mass or less, more preferably 950 by mass or less, still more preferably 80% by mass or less, particularly preferably 70% by mass or less, most preferably 60% by mass or less, further most preferably 50% by mass or less. When the amount is within the range indicated above, the advantageous effect can be more suitably achieved.

The amount of the at least one aromatic vinyl-diene block copolymer B per 100 parts by mass of the at least one aromatic vinyl-diene-olefin copolymer A is preferably 5 parts by mass or more, more preferably 10 parts by mass or more, still more preferably 20 parts by mass or more, particularly preferably 25 parts by mass or more, but is preferably 100 parts by mass or less, more preferably 90 parts by mass or less, still more preferably 80 parts by mass or less, particularly preferably 75 parts by mass or less. When the amount is within the range indicated above, the advantageous effect can be more suitably achieved.

The combined amount of the at least one aromatic vinyl-diene-olefin copolymer A and the at least one aromatic vinyl-diene block copolymer B based on 100% by mass of the rubber components is preferably 40% by mass or more, more preferably 60% by mass or more, still more preferably 80% by mass or more, particularly preferably 90% by mass or more, and may be 100% by mass. When the combined amount is within the range indicated above, the advantageous effect can be more suitably achieved.

The combined amount may also be 5 to 40% by mass.

Herein, the weight average molecular weight (Mw) and the number average molecular weight (Mn) may be determined by gel permeation chromatography (GPC) calibrated with polystyrene standards.

Also herein, the aromatic vinyl content (styrene content), the diene content (conjugated diene content, butadiene content), and the olefin content (combined content of ethylene and butylene, ethylene content), and "the amount of the components having a vinyl structure based on 100% by mass of the components derived from conjugated diene monomers" may be calculated from the ratios of the integrals of the peaks attributed to the respective components using a nuclear magnetic resonance (NMR) device.

Moreover, if a vulcanized rubber composition is difficult to measure by NMR, these may be calculated from the peak intensities attributed to the respective components using infrared spectroscopy (IR).

The rubber compositions contain the aromatic vinyl-diene-olefin copolymer A having an aromatic vinyl content of 1 to 45% by mass, a diene content of 0.1 to 50% by mass, and an olefin content of 30 to 90% by mass, and the aromatic vinyl-diene block copolymer B, and preferably contain the aromatic vinyl-diene-olefin copolymer A having an aromatic vinyl content of 25 to 40% by mass, a diene content of 0.1 to 20% by mass, and an olefin content of 50 to 75% by mass, and the aromatic vinyl-diene block copolymer B having an iodine number of 10 to 120. Also preferably, the copolymer A is at least one aromatic vinyl-diene-olefin copolymer having an aromatic vinyl content of 25 to 40% by mass, a butadiene content of 0.1 to 20% by mass, and a combined content of ethylene and butylene of 50 to 75% by mass, and the copolymer B is at least one styrene-butadiene block copolymer. More preferably, the at least one copolymer

B is present in an amount of 5 to 100 parts by mass per 100 parts by mass of the at least one copolymer A, and the combined amount of the copolymers A and B based on 100% by mass of the rubber components is 40 to 100% by mass.

Examples of rubber components other than the aromatic vinyl-diene-olefin copolymer A and the aromatic vinyl-diene block copolymer B which may be used include diene rubbers such as isoprene-based rubbers, polybutadiene rubbers (BR), styrene-butadiene rubbers (SBR), styrene-isoprene-butadiene rubbers (SIBR), acrylonitrile-butadiene rubbers (NBR), chloroprene rubbers (CR), and butyl rubbers (IIR). These rubber components may be used alone or in combinations of two or more.

The rubber compositions preferably contain at least one crosslinking agent selected from the group consisting of organic peroxides, compounds represented by the formula (1) below, and alkylphenol/sulfur chloride condensates. In this case, the advantageous effect (in particular, ozone resistance, fracture resistance, abrasion resistance, handling stability) can be more suitably achieved. The mechanism of this is not clear, but is believed to be as follows. The aromatic vinyl-diene-olefin copolymer A has fewer crosslinking points (double bonds) than usual diene rubbers and thus provides enhanced resistance to degradation, but on the other hand may reduce rubber elasticity due to the fewer crosslinking points. Meanwhile, in sulfur crosslinking usually used for diene rubbers, a non-uniform crosslink density is highly likely to be formed because the number of sulfur atoms reactive with double bonds is not constant, and the crosslinking site and form of the rubber molecules as a whole are not uniform either. In contrast, the above crosslinking agents can provide a constant distance between crosslinking points and longer crosslinks than in sulfur crosslinking, and thus can effectively take advantage of the fewer crosslinking points to provide excellent rubber elasticity as well as better degradation resistance than in sulfur crosslinking. For this reason, it is believed that the advantageous effect (in particular, ozone resistance, fracture resistance, abrasion resistance, handling stability) can be more suitably achieved.

These crosslinking agents may be used alone or in combinations of two or more.

$$R^1\text{-S-S-A S-S-}R^2 \qquad (1)$$

In formula (1), A represents a C2-C10 alkylene group, and $R^1$ and $R^2$ are the same as or different from each other and each represent a nitrogen atom-containing monovalent organic group.

The (C2-C10) alkylene group as A is not limited, and examples include linear, branched, and cyclic alkylene groups. Linear alkylene groups are preferred among these. The number of carbon atoms is preferably 4 to 8. Alkylene groups having one or more carbon atoms tend to show good thermal stability and exert their effect. Alkylene groups having less than 11 carbon atoms tend to facilitate the formation of the crosslinks represented by -S-S-A-S-S-.

Examples of alkylene groups that satisfy the above-mentioned conditions include ethylene, trimethylene, tetramethylene, pentamethylene, hexamethylene, heptamethylene, octamethylene, and decamethylene groups. Preferred among these is a hexamethylene group because it allows for the smooth formation of the -S-S-A-S-S-crosslinks between the polymers and is also thermally stable.

$R^1$ and $R^2$ may each be any nitrogen atom-containing monovalent organic group which preferably contains at least one aromatic ring and more preferably contains a linking group represented by N-C(=S)- where the carbon atom is bound to the dithio group. $R^1$ and $R^2$ may be the same as or different from each other, preferably the same for ease of manufacture and other reasons.

Examples of the compounds of formula (1) include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, and 1,10-bis(N,N'-dibenzylthiocarbamoyldithio)decane. These may be used alone or in combinations of two or more. Preferred among these is 1,6-bis(N,N'-dibenzylthiocarbamoyldithio)hexane because it is thermally stable and highly polarizable.

Examples of the organic peroxides include acyl peroxides such as benzoyl peroxide, dibenzoyl peroxide, and p-chlorobenzoyl peroxide; peroxyesters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate and 1,3-bis(1-butylperoxyisopropyl)benzene; hydroperoxides such as t-butyl hydroperoxide; and dicumyl peroxide, t-butyl cumyl peroxide, 2,5-bis(tert-butylperoxy)-2,5-dimethylhexane, aryl peroxides, diaryl peroxides, diacetyl peroxide, and di-t-butyl peroxide. These may be used alone or in combinations of two or more. Dicumyl peroxide is preferred among these.

The alkylphenol/sulfur chloride condensates are not limited, but compounds represented by the following formula (1) are preferred in order to well achieve the advantageous effect and to suppress reversion.

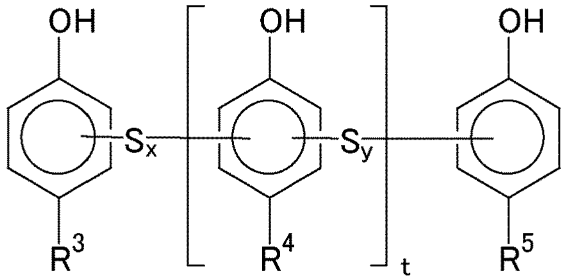

(1)

In the formula, $R^3$, $R^4$, and $R^5$ are the same as or different from each other and each represent a C5-C12 alkyl group; x and y are the same as or different from each other and each represent an integer of 1 to 3; and t represents an integer of 0 to 250.

The symbol t is preferably an integer of 0 or larger, more preferably 10 or larger, still more preferably 20 or larger, but preferably 250 or smaller, more preferably 100 or smaller, still more preferably 50 or smaller because such alkylphenol/sulfur chloride condensates show good dispersion into the rubber components. The symbols x and y are preferably both 2 in order to efficiently exhibit high hardness. $R^3$ to $R^5$ are each preferably a C6-C9 alkyl group because such alkylphenol/sulfur chloride condensates show good dispersion into the rubber components.

The alkylphenol/sulfur chloride condensates may be produced by known methods, such as by reacting an alkylphenol with a sulfur chloride at a molar ratio of 1:0.9 to 1.25, for example. Specific examples of the alkylphenol/sulfur chloride condensates include Tackirol V200 (the following formula (2)) available from Taoka Chemical Co., Ltd.

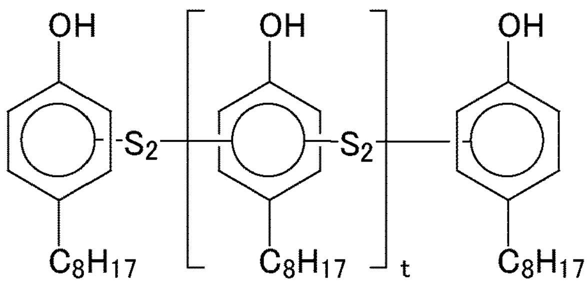

(2)

In the formula, t represents an integer of 0 to 100.

The amount of the at least one crosslinking agent (the combined amount of the organic peroxides, the compounds of formula (1), and the alkylphenol/sulfur chloride condensates when used in combination) per 100 parts by mass of the rubber components is preferably 1 part by mass or more, more preferably 5 parts by mass or more, still more preferably 8 parts by mass or more, but is preferably 40 parts by mass or less, more preferably 30 parts by mass or less, still more preferably 25 parts by mass or less. When the amount is within the range indicated above, the advantageous effect tends to be better achieved.

The rubber compositions may contain at least one sulfur, preferably together with the crosslinking agent.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc.

The amount of the at least one sulfur per 100 parts by mass of the rubber components is preferably 0.1 parts by mass or more, more preferably 0.2 parts by mass or more, still more preferably 0.3 parts by mass or more, but is preferably 5 parts by mass or less, more preferably 3 parts by mass or less, still more preferably 2 parts by mass or less, particularly preferably 1 part by mass or less. When the amount is within the range indicated above, the advantageous effect tends to be better achieved.

The rubber compositions preferably contain at least one metal carboxylate together with the crosslinking agent (in particular, organic peroxide). The metal carboxylate may be a single material or a combination of two or more materials.

The metal carboxylate may be formed of any carboxylic acid, preferably at least one selected from the group consisting of methacrylic acid, ethacrynic acid, acrylic acid, cinnamic acid, crotonic acid, maleic acid, fumaric acid, and itaconic acid, more preferably methacrylic acid or acrylic acid, still more preferably methacrylic acid.

The metal carboxylate may be formed of any metal, preferably at least one selected from the group consisting of sodium, potassium, iron, magnesium, calcium, zinc, barium, aluminum, tin, zirconium, lithium, cadmium, and cobalt, more preferably zinc or magnesium, still more preferably zinc.

Examples of the metal carboxylate include metal monocarboxylates, metal dicarboxylates, metal tricarboxylates, and metal tetracarboxylates, with metal dicarboxylates having two carboxylic acid groups being preferred.

The amount of the at least one metal carboxylate per 100 parts by mass of the rubber components is preferably 0.1 parts by mass or more, more preferably 0.5 parts by mass or more, still more preferably 1 part by mass or more, but is preferably 5 parts by mass or less, more preferably 3 parts by mass or less, still more preferably 2 parts by mass or less. When the amount is within the range indicated above, the advantageous effect tends to be better achieved.

The rubber compositions preferably contain at least one inorganic filler.

Examples of the inorganic filler include white fillers such as silica, clay, alumina, talc, calcium carbonate, magnesium carbonate, aluminum hydroxide, magnesium hydroxide, magnesium oxide, and titanium oxide, and carbon black. These inorganic fillers may be used alone or in combinations of two or more. Silica or carbon black is preferred among these.

The amount of the at least one inorganic filler per 100 parts by mass of the rubber components is preferably 0.5 parts by mass or more, more preferably 10 parts by mass or more, still more preferably 20 parts by mass or more, particularly preferably 30 parts by mass or more, most preferably 40 parts by mass or more, but is preferably 500 parts by mass or less, more preferably 200 parts by mass or less, still more preferably 180 parts by mass or less, particularly preferably 120 parts by mass or less, most preferably 100 parts by mass or less. When the amount is within the range indicated above, the advantageous effect tends to be better achieved.

In one embodiment of the present invention, the rubber compositions may contain no inorganic filler (the amount of the inorganic fillers per 100 parts by mass of the rubber components is preferably 5 parts by mass or less, more preferably 0 parts by mass) by taking advantage of the rigidity and hardness of the block copolymer. This can enhance processability and ozone resistance while minimizing a decrease in abrasion resistance.

Any carbon black may be used. Examples include N134, N110, N220, N234, N219, N339, N330, N326, N351, N550, and N762. These may be used alone or in combinations of two or more.

The nitrogen adsorption specific surface area ($N_2SA$) of the carbon black is preferably 80 $m^2/g$ or more, more preferably 100 $m^2/g$ or more, still more preferably 120 $m^2/g$ or more, but is preferably 200 $m^2/g$ or less, more preferably 180 $m^2/g$ or less. When the $N_2SA$ is within the range indicated above, the advantageous effect tends to be better achieved.

Herein, the $N_2SA$ of the carbon black is measured in accordance with JIS K6217-2:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co. Ltd., Columbia Carbon, etc.

The amount of the carbon black per 100 parts by mass of the rubber components is preferably 0.5 parts by mass or more, more preferably 5 parts by mass or more, still more preferably 20 parts by mass or more, particularly preferably 30 parts by mass or more, most preferably 40 parts by mass or more, but is preferably 200 parts by mass or less, more preferably 120 parts by mass or less, still more preferably 100 parts by mass or less, particularly preferably 80 parts by mass or less, most preferably 60 parts by mass or less, further most preferably 50 parts by mass or less. When the amount is within the range indicated above, the advantageous effect tends to be better achieved.

Examples of the silica include dry silica (anhydrous silicic acid) and wet silica (hydrous silicic acid). Wet silica is preferred because it has a large number of silanol groups. These may be used alone or in combinations of two or more.

The nitrogen adsorption specific surface area ($N_2SA$) of the silica is 40 $m^2/g$ or more, preferably 60 $m^2/g$ or more, more preferably 80 $m^2/g$ or more, still more preferably 160 $m^2/g$ or more, particularly preferably 200 $m^2/g$ or more, most preferably 220 $m^2/g$ or more. The $N_2SA$ is also preferably 600 $m^2/g$ or less, more preferably 300 $m^2/g$ or less, still more preferably 250 $m^2/g$ or less. When the $N_2SA$ is within the range indicated above, the advantageous effect tends to be more suitably achieved.

The $N_2SA$ of the silica is measured by a BET method in accordance with ASTM D3037-81.

The silica may be commercially available from Degussa, Rhodia, Tosoh Silica Corporation, Solvay Japan, Tokuyama Corporation, etc.

The amount of the silica per 100 parts by mass of the rubber components is preferably 5 parts by mass or more, more preferably 20 parts by mass or more, still more preferably 40 parts by mass or more, particularly preferably 60 parts by mass or more, most preferably 80 parts by mass or more, but is preferably 200 parts by mass or less, more preferably 150 parts by mass or less, still more preferably 120 parts by mass or less. When the amount is within the range indicated above, the advantageous effect tends to be more suitably achieved.

Also preferably, the rubber compositions contain substantially no white filler. In this case, the amount of the white fillers per 100 parts by mass of the rubber components is preferably 0.1 parts by mass or less, more preferably 0.01 parts by mass or less, still more preferably 0 parts by mass.

The rubber compositions containing silica preferably further contain at least one silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide,

bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. Sulfide or mercapto silane coupling agents are preferred among these, with mercapto silane coupling agents being more preferred.

Among the mercapto silane coupling agents, compounds represented by the following formula (I) are preferred. In this case, the advantageous effect tends to be better achieved.

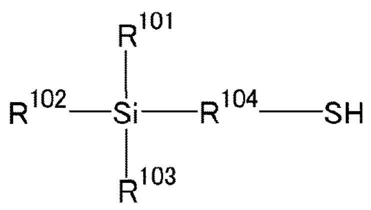
(I)

In the formula, $R^{101}$ to $R^{103}$ may be the same as or different from one another and each represent a branched or unbranched C1-C12 alkyl group, a branched or unbranched C1-C12 alkoxy group, or a group represented by $-O-(R^{111}-O)_b-R^{112}$ where the $R^{111}$ groups, whose number is b, may be the same as or different from one another and each represent a branched or unbranched divalent C1-C30 hydrocarbon group, $R^{112}$ represents a branched or unbranched C1-C30 alkyl group, a branched or unbranched C2-C30 alkenyl group, a C6-C30 aryl group, or a C7-C30 aralkyl group, and b represents an integer of 1 to 30; and $R^{104}$ represents a branched or unbranched C1-C6 alkylene group.

$R^{101}$ to $R^{103}$ each represent a branched or unbranched C1-C12, preferably C1-C5, alkyl group, a branched or unbranched C1-C12, preferably C1-C5, alkoxy group, or the group: $-O-(R^{111}-O)_b-R^{112}$. To well achieve the advantageous effect, preferably at least one of the $R^{101}$ to $R^{103}$ groups is the group: $-O-(R^{111}-O)_b-R^{112}$. More preferably, two of the $R^{101}$ to $R^{103}$ groups are the groups: $-O-(R^{111}-O)_b-R^{112}$ and the other one is a branched or unbranched C1-C12 alkoxy group.

$R^{111}$ in the $-O-(R^{111}-O)_b-R^{112}$ group for $R^{101}$ to $R^{103}$ represents a branched or unbranched divalent C1-C30, preferably C1-C15, more preferably C1-C3, hydrocarbon group. Examples of the hydrocarbon group include alkylene, alkenylene, and arylene groups. Preferred among these are alkylene groups.

The symbol b represents an integer of 1 to 30, preferably 2 or larger, more preferably 3 or larger, still more preferably 5 or larger, but preferably 20 or smaller, more preferably 7 or smaller, still more preferably 6 or smaller.

$R^{112}$ represents a branched or unbranched monovalent C1-C30, preferably C1-C15, more preferably C1-C3, hydrocarbon group. Examples of the hydrocarbon group include alkyl, alkenylene, aryl, and aralkyl groups. Preferred among these are alkyl groups.

Specific examples of the group: $-O-(R^{111}-O)_b-R^{112}$ include $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, and $-O-(C_2H_4-O)_7-C_{13}H_{27}$. Preferred among these are $-O-(C_2H_4-O)_5-C_{11}H_{23}$, $-O-(C_2H_4-O)_5-C_{13}H_{27}$, $-O-(C_2H_4-O)_5-C_{15}H_{31}$, and $-O-(C_2H_4-O)_6-C_{13}H_{27}$.

The branched or unbranched C1-C6, preferably C1-C5, alkylene group as $R^{104}$ is as described for $R^{111}$.

Examples of the mercapto silane coupling agents of formula (I) include 3-mercaptopropyltrimethoxysilane, 3-mercaptopropyltriethoxysilane, 2-mercaptoethyltrimethoxysilane, 2-mercaptoethyltriethoxysilane, and a compound represented by the formula below (Si363 available from Evonik). The compound of the formula below is suitable. These may be used alone or in combinations of two or more.

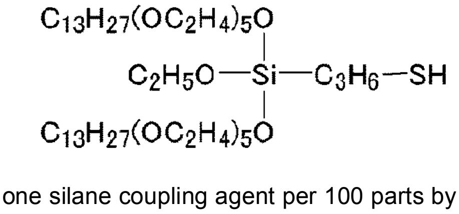

The amount of the at least one silane coupling agent per 100 parts by mass of the silica is preferably 3 parts by mass or more, more preferably 5 parts by mass or more, but is preferably 20 parts by mass or less, more preferably

15 parts by mass or less. When the amount is within the range indicated above, the advantageous effect tends to be better achieved.

The rubber compositions may contain at least one plasticizer.

The term "plasticizer" refers to a material that imparts plasticity to a rubber component, and conceptually includes liquid plasticizers (plasticizers which are liquid (in liquid state) at 25°C) and solid plasticizers

(plasticizers which are solid at 25°C). Specifically, it is a component that can be extracted from a rubber composition using acetone. These may be used alone or in combinations of two or more.

The amount of the at least one plasticizer (the combined amount of the liquid and solid plasticizers) per 100 parts by mass of the rubber components is preferably 0.5 parts by mass or more, more preferably 3 parts by mass or more, still more preferably 5 parts by mass or more, but is preferably 200 parts by mass or less, more preferably 100 parts by mass or less, still more preferably 80 parts by mass or less, particularly preferably 50 parts by mass or less.

Moreover, the amount of the at least one plasticizer (the combined amount of the liquid and solid plasticizers) per 100 parts by mass of the rubber components may be 0 to 10 parts by mass. In this case, the advantageous effect can be more suitably achieved.

Examples of the liquid plasticizers include process oils, extender oils, plant oils, animal oils, and other fats and oils, liquid polymers (e.g. diene-, olefin-, or ester-based liquid polymers), liquid resins, essential oils from natural products such as turpentine oil, and ester plasticizers. Examples of the solid plasticizers include solid resins usually used in the tire industry which are solid (in solid state) at 25°C. These may be used alone or in combinations of two or more. Process oils are preferred among these. Also preferred are liquid polymers. More preferred are liquid diene polymers.

Examples of the liquid resins include resins which are liquid at 25°C, such as terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins.

Examples of the liquid diene polymers include diene polymers which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). These polymers may be modified at the chain end or the backbone with a polar group. Liquid SBR and liquid BR are preferred among these, with liquid BR being more preferred.

The solid plasticizers may be any solid resin or wax usually used as compounding materials for tires. Specific examples include terpene resins, rosin resins, styrene resins, olefin resins, C5 resins, C9 resins, C5/C9 resins, coumarone resins, indene resins, coumarone-indene resins, acrylic resins, and urethane resins. These may be used alone, or two or more of these may be used in admixture. Moreover, the resins themselves may be copolymerized from multiple monomer components. To better achieve the advantageous effect, styrene resins are preferred among these, with $\alpha$-methylstyrene resins being more preferred, with copolymers of $\alpha$-methylstyrene and styrene being still more preferred.

The rubber compositions preferably contain at least one vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazyl sulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide and guanidine vulcanization accelerators are preferred among these, with sulfenamide vulcanization accelerators being more preferred. Also preferred are combinations of sulfonamide and guanidine vulcanization accelerators.

The vulcanization accelerator may be commercially available from Kawaguchi Chemical Industry Co., Ltd., Ouchi Shinko Chemical Industrial Co., Ltd., Rhein Chemie, etc.

The amount of the at least one vulcanization accelerator per 100 parts by mass of the rubber components is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber compositions may contain at least one wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Petroleum waxes are preferred among these, with paraffin waxes being more preferred.

The wax may be commercially available from Ouchi Shinko Chemical Industrial Co., Ltd., Nippon Seiro Co., Ltd., Seiko Chemical Co., Ltd., etc.

The amount of the at least one wax per 100 parts by mass of the rubber components is preferably 0.3 parts by mass or more, more preferably 0.5 parts by mass or more, but is preferably 20 parts by mass or less, more preferably 10 parts by mass or less. When the amount is within the range indicated above, the advantageous effect tends to be better achieved.

The rubber compositions may contain at least one antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine antioxidants.

The antioxidant may be commercially available from Seiko Chemical Co., Ltd., Sumitomo Chemical Co., Ltd., Ouchi Shinko Chemical Industrial Co., Ltd., Flexsys, etc.

The amount of the at least one antioxidant per 100 parts by mass of the rubber components is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber compositions may contain at least one stearic acid.

The stearic acid may be conventional ones, e.g., available from NOF Corporation, Kao Corporation, FUJIFILM Wako Pure Chemical Corporation, or Chiba Fatty Acid Co., Ltd.

The amount of the at least one stearic acid per 100 parts by mass of the rubber components is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber compositions may contain at least one zinc oxide.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the at least one zinc oxide per 100 parts by mass of the rubber components is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

In addition to the above-described components, the rubber compositions may contain additives commonly used in the tire industry, such as organic fibers. The amount of each of such additives is preferably 0.1 to 200 parts by mass per 100 parts by mass of the rubber components.

The rubber compositions may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 20 minutes.

The rubber compositions may be used in tire components (as tire rubber compositions) such as treads (cap treads), sidewalls, base treads, undertreads, clinches, bead apexes, breaker cushion rubbers, rubbers for carcass cord topping, insulations, chafers, and innerliners, and side reinforcement layers of run-flat tires. The rubber compositions are especially suitable for treads, among others.

The tires (pneumatic tires, solid tires, airless tires, etc.) of the present invention can be produced from the above-described rubber compositions by usual methods. Specifically, an unvulcanized rubber composition containing additives as needed may be extruded into the shape of a tire component (in particular, a tread (cap tread)) and then formed and assembled with other tire components in a usual manner in a tire building machine to build an unvulcanized tire, which may then be heated and pressurized in a vulcanizer to produce a tire.

The tires are suitable as tires for passenger vehicles, large passenger vehicles, large SUVs, trucks and buses, or two-wheeled vehicles, racing tires, winter tires (studless winter tires, snow tires, studded tires), all-season tires, run-flat tires, aircraft tires, mining tires, or other tires.

EXAMPLES

The present invention is specifically described with reference to, but not limited to, examples.

The microstructure and weight average molecular weight (Mw) of the rubber components used were evaluated as described below.

<Microstructure>

The amounts of the structural units of the (co)polymers were measured using an AV400 NMR analyzer and a data analysis software TOP SPIN 2.1 both available from BRUKER.

<Weight average molecular weight (Mw)>

The weight average molecular weight (Mw) was determined by gel permeation chromatography (GPC) under the following conditions (1) to (8).

(1) Apparatus: HLC-8220 available from Tosoh Corporation
(2) Separation column: HM-H (two in series) available from Tosoh Corporation
(3) Measurement temperature: 40°C
(4) Carrier: tetrahydrofuran
(5) Flow rate: 0.6 mL/min
(6) Injection amount: 5 μL
(7) Detector: differential refractometer
(8) Molecular weight standards: polystyrene standards

The chemicals used in the examples and comparative examples are listed below.

<Ethylene copolymer 1>: a styrene-butadiene-ethylene copolymer (random copolymer, styrene content: 25% by mass, vinyl-butadiene content: 5% by mass, cis- or trans-butadiene content: 30% by mass, ethylene content: 40% by mass, Mw: 250,000) prepared by polymerization as described in Production Example 1 of JP 4088258 B (JP 2005-220313 A), except for changing the amount of styrene introduced and other conditions
<Ethylene copolymer 2>: a styrene-butadiene-ethylene copolymer (random copolymer, styrene content: 30% by mass, vinyl-butadiene content: 3% by mass, cis- or trans-butadiene content: 17% by mass, ethylene content: 50% by mass, Mw: 250,000) prepared by polymerization as described in Production Example 1 of JP 4088258 B (JP 2005-220313 A), except for changing the amount of styrene introduced and other conditions
<Ethylene copolymer 3>: a styrene-butadiene-ethylene copolymer (random copolymer, styrene content: 30% by mass, vinyl-butadiene content: 2% by mass, cis- or trans-butadiene content: 8% by mass, ethylene content: 60% by mass, Mw: 250,000) prepared by polymerization as described in Production Example 1 of JP 4088258 B (JP 2005-220313 A), except for changing the amount of styrene introduced and other conditions
<Ethylene copolymer 4>: a styrene-butadiene-ethylene copolymer (random copolymer, styrene content: 25% by mass, vinyl-butadiene content: 1% by mass, cis- or trans-butadiene content: 4% by mass, ethylene content: 70% by mass, Mw: 250,000) prepared by polymerization as described in Production Example 1 of JP 4088258 B (JP 2005-220313 A), except for changing the amount of styrene introduced and other conditions
<Hydrogenated SBR>: a hydrogenated styrene-butadiene rubber (hydrogenated SBR, styrene content: 34% by mass, vinyl-butadiene content: 0% by mass, cis- or trans-butadiene content: 5% by mass, ethylene content: 61% by mass, Mw: 250,000, degree of hydrogenation of butadiene units: 93% by mass) synthesized in Synthesis Example 1 described below
<Block copolymer 1>: a modified styrene-hydrogenated butadiene-styrene block copolymer terminated with an alkoxysilyl group (modified SEBS, styrene content: 25% by mass, degree of hydrogenation of butadiene units: 90% by mass, vinyl-butadiene unit content based on 100% by mass of butadiene units after hydrogenation: 0% by mass, cis-butadiene unit content based on 100% by mass of butadiene units after hydrogenation: 5% by mass, Mw: 150,000, iodine number: 10) obtained by Ti-catalyzed hydrogenation of a modified copolymer (chain end-modified SBS block copolymer) prepared as described in Production Example 3 of JP 6267419 B (JP 2014-105293 A), except for changing the amount of styrene introduced and other conditions
<Block copolymer 2>: a block copolymer (tetramer formed by condensation of styrene-butadiene diblock copolymer, Mw: 200,000, styrene content: 25% by mass, degree of coupling: 850, amount of components having vinyl structure based on 100% by mass of components derived from conjugated diene monomers: 38% by mass, iodine number: 63; The copolymer showed multimodality in a molecular weight distribution curve obtained by GPC) obtained by

changing the amounts of styrene and butadiene introduced and the timing of introduction in Synthesis Example of Block Copolymer 1 described in JP 6208422 B (JP 2014-105238 A)

<Block copolymer 3>: a styrene-butadiene-styrene-butadiene tetrablock copolymer (SBSB, Mw: 250,000, styrene content: 32% by mass, amount of components having vinyl structure based on 100% by mass of components derived from conjugated diene monomers: 25% by mass, iodine number: 75, number of block segments: 4) obtained by changing the amounts of styrene and butadiene introduced and the timing of introduction in Synthesis Example of Block Copolymer 1 described in JP 6208428 B (JP 2014-133845 A)

<Block copolymer 4>: a modified styrene-hydrogenated butadiene-styrene block copolymer terminated with an alkoxysilyl group (modified SEBS, styrene content: 25% by mass, degree of hydrogenation of butadiene units: 95% by mass, vinyl-butadiene unit content based on 100% by mass of butadiene units after hydrogenation: 1% by mass, cis-butadiene unit content based on 100% by mass of butadiene units after hydrogenation: 7% by mass, Mw: 150,000, iodine number: 5) prepared as described for block copolymer 1, except for changing the conditions of hydrogenation

<Block copolymer 5>: a modified styrene-hydrogenated butadiene-styrene block copolymer terminated with an alkoxysilyl group (modified SEBS, styrene content: 25% by mass, degree of hydrogenation of butadiene units: 70% by mass, vinyl-butadiene unit content based on 100% by mass of butadiene units after hydrogenation: 8% by mass, cis-butadiene unit content based on 100% by mass of butadiene units after hydrogenation: 16% by mass, Mw: 150,000, iodine number: 45) prepared as described for block copolymer 1, except for changing the conditions of hydrogenation

<SBR>: a modified S-SBR terminated with an alkoxysilyl group (styrene content: 25% by mass, Mw: 600,000)

<Silica>: Ultrasil 9000GR ($N_2SA$: 240 $m^2/g$, CTAB: 200 $m^2/g$) available from Evonik

<Carbon black> Diablack SA ($N_2SA$: 137 $m^2/g$) available from Mitsubishi Chemical Corporation

<Silane coupling agent>: Si363 available from Evonik

<Resin>: SYLVARES SA85 (a copolymer of $\alpha$-methylstyrene and styrene, softening point: 85°C) available from KRATON

<Liquid resin>: Ricon 340 (liquid BR) available from CRAY VALLEY

<Liquid plasticizer>: vivatec 500 (TDAE oil) available from H&R

<Peroxide crosslinking agent>: PERCUMYL D (dicumyl peroxide) available from NOF Corporation

<Zinc dimethacrylate>: SAN-ESTER SK-30 (zinc dimethacrylate) available from Sanshin Chemical Industry Co., Ltd.

<Organic crosslinking agent 1>: Vulcuren VP KA9188 (1,6-bix(N,N'-dibenzylthiocarbamoyldithio)hexane) available from LANXESS

<Organic crosslinking agent 2>: Tackirol V200 (a compound of formula (2), alkylphenol/sulfur chloride condensate, sulfur content: 24% by mass) available from Taoka Chemical Co., Ltd

<Stearic acid>: stearic acid beads "TSUBAKI" available from NOF Corporation

<Zinc oxide>: zinc oxide #2 available from Mitsui Mining & Smelting Co., Ltd.

<Antioxidant>: NOCRAC 6C (N-(1,3-dimethylbutyl)-N'-phenyl-p-phenylenediamine, 6PPD) available from Ouchi Shinko Chemical Industrial Co., Ltd.

<Sulfur>: powdered sulfur available from Tsurumi Chemical Industry Co., Ltd.

<Vulcanization accelerator 1>: NOCCELER D (N,N'-diphenylguanidine) available from Ouchi Shinko Chemical Industrial Co., Ltd.

<Vulcanization accelerator 2>: NOCCELER CZ (N-cyclohexyl-2-benzothiazolylsulfenamide) available from Ouchi Shinko Chemical Industrial Co., Ltd.

A sufficiently nitrogen-purged heat-resistant reaction vessel was charged with n-hexane, styrene, butadiene, TMEDA, and n-butyllithium, followed by stirring at 50°C for five hours to perform a polymerization reaction.

Next, the reaction solution was stirred while supplying hydrogen gas at a pressure of 0.4 MPa gauge to react the unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature, and the hydrogen pressure was returned to normal pressure. Then, the reaction solution was drawn from the reaction vessel and introduced into water with stirring. The solvent was removed by steam stripping, thereby giving a hydrogenated styrene-butadiene rubber.

(Examples and Comparative Examples)

The chemicals other than the sulfur, organic crosslinking agent, peroxide crosslinking agent, zinc dimethacrylate, and vulcanization accelerators in the formulation amounts shown in Table 1 or 2 were kneaded at 150°C for four minutes using a 1.7 L Banbury mixer (Kobe Steel, Ltd.) to give a kneaded mixture. To the kneaded mixture were then added the

sulfur, organic crosslinking agent, peroxide crosslinking agent, zinc dimethacrylate, and/or vulcanization accelerators, and they were kneaded for five minutes at 80°C using an open roll mill to give an unvulcanized rubber composition.

The unvulcanized rubber composition was press-vulcanized in a 0.5-mm thick mold at 170°C for 20 minutes to give a vulcanized rubber composition.

Separately, the unvulcanized rubber composition prepared as above was formed into a tread shape and assembled with other tire components in a tire building machine to build an unvulcanized tire, which was then vulcanized at 170°C for 10 minutes to prepare a test tire (size: 215/55R16, tire for passenger vehicles).

The unvulcanized rubber compositions, vulcanized rubber compositions, and test tires prepared as above were evaluated as described below. Tables 1 and 2 show the results.

It should be noted that Comparative Examples 1, 2, and 5 are used as standards of comparison in the subtables of Table 1 from left to right, respectively. Comparative Example 6 is used as a standard of comparison in Table 2.

<Processability>

In accordance with JIS K 6300-1 "Rubber, unvulcanized - Physical property - Part 1: Determination of Mooney viscosity and pre-vulcanization characteristics with Mooney viscometer", a Mooney viscosity tester was preheated for one minute to 130°C, a small rotor was rotated at this temperature, and after a lapse of four minutes the Mooney viscosity ($ML_{1+4}$/130°C) of the unvulcanized rubber compositions was measured. The measured Mooney viscosity of each composition is expressed as an index using the equation below, with the standard comparative example set equal to 100. A higher index indicates a lower viscosity and better unvulcanized processability. An index of 80 or higher is considered good.

(Processability index) = (Mooney viscosity of standard comparative example)/(Mooney viscosity of each composition) × 100

<Ozone resistance test>

The vulcanized rubber compositions were tested in accordance with JIS K 6259 "Rubber, vulcanized or thermoplastic -- Determination of ozone resistance" at an ozone concentration of 50 ± 5 pphm, a temperature of 50°C, and an elongation strain of 20 ± 2% for 48 hours, and then observed for cracks to evaluate the ozone resistance.

The evaluation was based on the following criteria, where the standard comparative example was assigned a score of 100. For the evaluation results between the criterion scores, the middle values between the scores were given.

140: Almost no cracks were found.
120: Few cracks were found without large cracks.
110: The size and number of cracks were both slightly smaller.
80: The size of cracks was equivalent to the standard comparative example, but the number was larger.
60: Many large cracks were also found, and the number was also larger.

<Abrasion resistance>

The test tires of each formulation example were mounted on a front-engine, front-wheel-drive car of 2,000 cc displacement made in Japan, and the respective cars were run at an air temperature of 22 to 27°C under the same road conditions, including wet surfaces and sharp curves. After 5,000 km of running at 60 to 150 km/h, the depth of the grooves on the tire tread portion was measured. A distance that caused a 1 mm decrease in tire groove depth was calculated and expressed as an index using the equation below. A higher index indicates better abrasion resistance.

Abrasion resistance index = (Distance that caused a 1 mm decrease in groove depth)/(Distance that caused a 1 mm decrease in tire groove depth of standard comparative example) × 100

<Handling stability >

During the initial running in the abrasion resistance test, the driver evaluated the handling stability according to the following criteria, where the standard comparative example was assigned a score of 100, and higher scores were given to tires with better results than the standard comparative example, and also using the middle values between the criterion scores.

140: Significantly superior
120: Quite superior
110: Superior
80: Slightly inferior
70: Inferior
60: Quite inferior

<Fracture resistance>

The test tires of each formulation example were mounted on a front-engine, front-wheel-drive car of 2,000 cc displacement made in Japan. After the car run about 10,000 km mainly off road, e.g., in a quarry, the number of cuts and chips per unit area of the tread surface was counted and expressed as an index, with the standard comparative example set equal to 100. A higher index indicates better fracture resistance.

[Table 1]

| | | Ex. 1 | Comp. Ex. 1 | Ex. 2 | Ex. 3 |
|---|---|---|---|---|---|
| Amount (parts by mass) | Ethylene copolymer 1 | 100 | | 100 | 100 |
| | Block copolymer 1 | | | | |
| | Block copolymer 2 | 70 | 70 | 70 | 70 |
| | Block copolymer 3 | | | | |
| | SBR | | 100 | | |
| | Silica | | | | |
| | Carbon black | | | | |
| | Silane coupling agent | | | | |
| | Liquid plasticizer | 5 | 5 | 5 | 5 |
| | Peroxide crosslinking agent | | | | |
| | Zinc dimethacrylate | | | | |
| | Organic crosslinking agent 1 ( KA9188 ) | 10 | 10 | | |
| | Organic crosslinking agent 2 ( V200 ) | | | 10 | |
| | Stearic acid | 2 | 2 | 2 | 2 |
| | Zinc oxide | 1 | 1 | 1 | 1 |
| | Antioxidant | 1.5 | 1.5 | 1.5 | 1.5 |
| | Sulfur | 0.5 | 0.5 | 0.5 | 5 |
| | Vulcanization accelerator 1 | 0.5 | 0.5 | 0.5 | 2.5 |
| | Vulcanization accelerator 2 | 0.5 | 0.5 | 0.5 | 2.5 |
| Vinyl unit content based on 100% by mass in total of butadiene units of copolymers A and B | | 24.8 | - | 24.8 | 24.8 |
| Evaluation results | Processability | 108 | 100 | 108 | 108 |
| | Ozone resistance | 140 | 100 | 140 | 140 |
| | Handling stability | 120 | 100 | 120 | 110 |
| | Abrasion resistance | 135 | 100 | 130 | 120 |
| | Fracture resistance | 150 | 100 | 135 | 100 |

| | | Ex. 4 | Comp. Ex. 2 | Comp. Ex. 3 | Comp. Ex. 4 |
|---|---|---|---|---|---|
| Amount (parts by mass) | Ethylene copolymer 1 | 100 | | 100 | |
| | Block copolymer 1 | 30 | 30 | | |
| | Block copolymer 2 | | | | |
| | Block copolymer 3 | | | | |
| | SBR | | 100 | 30 | 130 |
| | Silica | 90 | 90 | 90 | 90 |
| | Carbon black | 5 | 5 | 5 | 5 |
| | Silane coupling agent | 9 | 9 | 9 | 9 |
| | Liquid plasticizer | 5 | 5 | 25 | 25 |
| | Peroxide crosslinking agent | | | | |
| | Zinc dimethacrylate | | | | |
| | Organic crosslinking agent 1 ( KA9188 ) | 10 | 10 | 10 | 10 |
| | Organic crosslinking agent 2 ( V200 ) | | | | |
| | Stearic acid | 2 | 2 | 2 | 2 |
| | Zinc oxide | 2 | 2 | 2 | 2 |
| | Antioxidant | 2 | 2 | 2 | 2 |
| | Sulfur | 5 | 5 | 5 | 5 |
| | Vulcanization accelerator 1 | 2 | 2 | 2 | 2 |
| | Vulcanization accelerator 2 | 2.5 | 2.5 | 2.5 | 2.5 |
| Vinyl unit content based on 100% by mass in total of butadiene units of copolymers A and B | | 5.1 | - | - | - |
| Evaluation results | Processability | 105 | 100 | 103 | 104 |
| | Ozone resistance | 130 | 100 | 110 | 100 |
| | Handling stability | 140 | 100 | 90 | 80 |
| | Abrasion resistance | 140 | 100 | 115 | 110 |
| | Fracture resistance | 150 | 100 | 120 | 105 |

| | | Ex. 5 | Comp. Ex. 5 | Ex. 6 | Ex. 7 | Ex. 8 |
|---|---|---|---|---|---|---|
| Amount (parts by mass) | Ethylene copolymer 1 | 100 | | 100 | 100 | 100 |
| | Block copolymer 1 | | | | | |
| | Block copolymer 2 | 30 | 30 | 30 | | |
| | Block copolymer 3 | | | | 30 | 30 |
| | SBR | | 100 | | | |
| | Silica | | | 90 | | 90 |
| | Carbon black | 50 | 50 | 5 | 50 | 5 |
| | Silane coupling agent | | | 9 | | 9 |
| | Liquid plasticizer | 5 | 5 | 25 | 5 | 25 |
| | Peroxide crosslinking agent | 20 | 20 | 20 | 20 | 20 |
| | Zinc dimethacrylate | 1.5 | 1.5 | 1.5 | 1.5 | 1.5 |
| | Organic crosslinking agent 1 ( KA9188 ) | | | | | |
| | Organic crosslinking agent 2 ( V200 ) | | | | | |
| | Stearic acid | | | | | |
| | Zinc oxide | 2 | 2 | 2 | 2 | 2 |
| | Antioxidant | 2 | 2 | 2 | 2 | 2 |
| | Sulfur | 0.5 | 0.5 | 1.5 | 0.5 | 1.5 |
| | Vulcanization accelerator 1 | 0.5 | 0.5 | 2 | 0.5 | 2 |
| | Vulcanization accelerator 2 | 0.5 | 0.5 | 2.5 | 0.5 | 2.5 |
| Vinyl unit content based on 100% by mass in total of butadiene units of copolymers A and B | | 16.8 | - | 16.8 | 12.8 | 12.8 |
| Evaluation results | Processability | 108 | 100 | 90 | 110 | 95 |
| | Ozone resistance | 140 | 100 | 130 | 140 | 130 |
| | Handling stability | 120 | 100 | 130 | 120 | 120 |
| | Abrasion resistance | 120 | 100 | 128 | 122 | 120 |
| | Fracture resistance | 140 | 100 | 115 | 145 | 110 |

[Table 2]

| | | Comp. Ex. 6 | Comp. Ex. 7 | Comp. Ex. 8 | Comp. Ex. 9 | Comp. Ex. 10 | Comp. Ex. 11 | Comp. Ex. 12 | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|---|---|---|---|---|---|---|---|
| Amount (parts by mass) | Ethylene copolymer 1 | | 30 | | | | 30 | 30 | | | | | | | | | |
| | Ethylene copolymer 2 | | | 30 | | | | | 15 | 30 | 70 | | | | | | |
| | Ethylene copolymer 3 | | | | | | | | | | | 70 | 70 | | | 70 | 70 |
| | Ethylene copolymer 4 | | | | | | | | | | | | | 70 | | | |
| | Hydrogenated SBR | | | | | | | | | | | | | | 70 | | |
| | Block copolymer 4 | | | | 30 | | | | | | | | | | | | |
| | Block copolymer 5 | | | | | 30 | | | 15 | 30 | 30 | 30 | 30 | 30 | 30 | 30 | 30 |
| | SBR | 100 | 70 | 70 | 70 | 70 | 70 | 70 | 70 | 40 | | | | | | | |
| | Silica | 50 | 50 | 50 | 50 | 50 | 70 | 70 | 50 | 50 | 50 | 50 | 70 | 70 | 70 | 70 | 70 |
| | Carbon black | 5 | 5 | 5 | 5 | 5 | 5 | 5 | 5 | 5 | 5 | 5 | 5 | 5 | 5 | 5 | 5 |
| | Silane coupling agent | 5 | 5 | 5 | 5 | 5 | 5 | 5 | 5 | 5 | 5 | 5 | 5 | 5 | 5 | 5 | 5 |
| | Resin | | | | | | | 5 | | | | | | | | 5 | |
| | Liquid resin | | | | | | | | | | | | | | | | 5 |
| | Liquid plasticizer | 5 | 5 | 5 | 5 | 5 | 15 | 10 | 5 | 5 | 5 | 5 | 15 | 15 | 15 | 10 | 10 |
| | Peroxide crosslinking agent | | | | | | | | | | | | | | | | |
| | Zinc dimethacrylate | | | | | | | | | | | | | | | | |
| | Organic crosslinking agent 1 ( KA9188 ) | | | | | | | | | | | | | | | | |
| | Organic crosslinking agent 2 ( V200 ) | | | | | | | | | | | | | | | | |
| | Stearic acid | 2 | 2 | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 |
| | Sulfur | 1 | 1 | 1 | 1 | 1 | 1 | 1 | 1 | 1 | 1 | 1 | 1 | 1 | 1 | 1 | 1 |
| | Vulcanization accelerator 1 | 1 | 1 | 1 | 1 | 1 | 1 | 1 | 1 | 1 | 1 | 1 | 1 | 1 | 1 | 1 | 1 |
| | Vulcanization accelerator 2 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Vinyl unit content | | | 150 | 90 | 30 | 240 | 150 | 150 | 165 | 330 | 450 | 380 | 380 | 310 | 240 | 380 | 380 |
| BR unit content | | | 1050 | 600 | 240 | 720 | 1050 | 1050 | 660 | 1320 | 2120 | 1420 | 1420 | 1000 | 5340 | 1420 | 1420 |
| Vinyl unit content based on 100% by mass in total of butadiene units of copolymers A and B | | - | 14.3 | 15.0 | - | - | 14.3 | 14.3 | 25.0 | 25.0 | 21.2 | 26.8 | 26.8 | 31.0 | 4.5 | 26.8 | 26.8 |
| Amount of copolymer B per 100 parts by mass of copolymer A | | - | 0 | 0 | - | - | 0 | 0 | 100 | 100 | 43 | 43 | 43 | 43 | 43 | 43 | 43 |
| Amount of copolymers A and B based on 100 parts by mass of rubber components | | 0 | 30 | 30 | 30 | 30 | 30 | 30 | 30 | 60 | 100 | 100 | 100 | 100 | 100 | 100 | 100 |
| Evaluation results | Processability | 100 | 95 | 100 | 92 | 105 | 80 | 90 | 105 | 100 | 90 | 90 | 80 | 80 | 85 | 90 | 95 |
| | Ozone resistance | 100 | 120 | 125 | 120 | 115 | 115 | 115 | 120 | 130 | 140 | 140 | 135 | 135 | 135 | 130 | 140 |
| | Handling stability | 100 | 120 | 125 | 120 | 115 | 135 | 125 | 120 | 135 | 140 | 145 | 150 | 150 | 150 | 145 | 145 |
| | Abrasion resistance | 100 | 110 | 105 | 110 | 105 | 100 | 105 | 115 | 125 | 150 | 150 | 130 | 130 | 140 | 135 | 140 |
| | Fracture resistance | 100 | 115 | 110 | 115 | 120 | 105 | 110 | 120 | 130 | 130 | 135 | 120 | 125 | 125 | 125 | 125 |

Ex.: Example

Comp. Ex.: Comparative Example

As shown in Tables 1 and 2, the overall performance in terms of processability, ozone resistance, handling stability, abrasion resistance, and fracture resistance (expressed by the sum of the five indices of processability, ozone resistance, handling stability, abrasion resistance, and fracture resistance) was improved in the examples containing an aromatic vinyl-diene-olefin copolymer A having an aromatic vinyl content of 1 to 45% by mass, a diene content of 0.1 to 50% by mass, and an olefin content of 30 to 90% by mass, and an aromatic vinyl-diene block copolymer B.

Comparisons between Example 4 and Comparative Examples 2 to 4 revealed that the overall performance in terms of processability, ozone resistance, handling stability, abrasion resistance, and fracture resistance was synergistically improved by the combination of the aromatic vinyl-diene-olefin copolymer A and the aromatic vinyl-diene block copolymer B.

## Claims

**1.** (Amended) A tire, comprising a tire component comprising a rubber composition, the rubber composition comprising:

at least one aromatic vinyl-diene-olefin copolymer A having an aromatic vinyl content of 1 to 45% by mass, a diene content of 0.1 to 50% by mass, and an olefin content of 30 to 90% by mass; and
at least one aromatic vinyl-diene block copolymer B.

**2.** (Amended) The tire according to claim 1,

wherein the copolymer A is at least one aromatic vinyl-diene-olefin copolymer having an aromatic vinyl content of 1 to 45% by mass, a butadiene content of 0.1 to 50% by mass, and a combined content of ethylene and butylene of 30 to 90% by mass,
the copolymer B is at least one styrene-butadiene block copolymer,
the at least one copolymer B is present in an amount of 5 to 100 parts by mass per 100 parts by mass of the at least one copolymer A in the rubber composition, and
the rubber composition comprises, based on 100% by mass of rubber components therein, 40 to 100% by mass in total of the copolymers A and B.

**3.** (Amended) The tire according to claim 2,
wherein the styrene-butadiene block copolymer has a degree of hydrogenation of a butadiene portion of 50 to 99% by mass.

**4.** (Amended) The tire according to claim 2 or 3,
wherein a backbone and/or chain end of the styrene-butadiene block copolymer is modified.

**5.** (Amended) The tire according to any one of claims 2 to 4, wherein the styrene-butadiene block copolymer is at least one tetramer obtained by condensation of a styrene-butadiene diblock copolymer.

**6.** (Amended) The tire according to any one of claims 1 to 5, wherein a backbone and/or chain end of the copolymer A is modified.

**7.** (Amended) The tire according to any one of claims 1 to 6,

wherein the rubber composition comprises at least one crosslinking agent selected from the group consisting of organic peroxides, compounds represented by the following formula (1), and alkylphenol/sulfur chloride condensates,

$$R^1\text{-S-S-A-S-S-}R^2 \qquad (1)$$

wherein A represents a C2-C10 alkylene group, and $R^1$ and $R^2$ are the same as or different from each other and each represent a nitrogen atom-containing monovalent organic group.

**8.** (Amended) The tire according to claim 7,
wherein the rubber composition comprises at least one metal carboxylate.

**9.** (Amended) The tire according to claim 8,

wherein the metal carboxylate is formed of:
at least one carboxylic acid selected from the group consisting of methacrylic acid, ethacrynic acid, acrylic acid, cinnamic acid, crotonic acid, maleic acid, fumaric acid, and itaconic acid; and
at least one metal selected from the group consisting of sodium, potassium, iron, magnesium, calcium, zinc, barium, aluminum, tin, zirconium, lithium, cadmium, and cobalt.

**10.** (Amended) The tire according to any one of claims 1 to 9,
wherein a vinyl unit content based on 100% by mass in total of butadiene units of the copolymers A and B is 30% by mass or less.

**11.** (Amended) The tire according to any one of claims 1 to 9,
wherein a vinyl unit content based on 100% by mass in total of butadiene units of the copolymers A and B is 200 by mass or less.

**12.** (Amended) The tire according to any one of claims 1 to 11,
wherein the rubber composition comprises, based on 100% by mass of rubber components therein, 80 to 100% by mass in total of the copolymers A and B.

**13.** (Amended) The tire according to any one of claims 1 to 12,
wherein the rubber composition comprises, per 100 parts by mass of rubber components therein, 0.5 to 500 parts by mass of at least one inorganic filler.

**14.** (Amended) The tire according to any one of claims 1 to 12,
wherein the rubber composition comprises, per 100 parts by mass of rubber components therein, 0.5 to 100 parts by mass of at least one carbon black.

**15.** (Amended) The tire according to any one of claims 1 to 12,
wherein the rubber composition comprises substantially no white filler.

**16.** (Amended) The tire according to any one of claims 1 to 15,
wherein the rubber composition comprises, per 100 parts by mass of rubber components therein, 0.5 to 200 parts by mass of at least one plasticizer.

**17.** (Amended) The tire according to any one of claims 1 to 15,
wherein the rubber composition comprises, per 100 parts by mass of rubber components therein, 0 to 10 parts by mass of at least one plasticizer.

**18.** (Amended) The tire according to any one of claims 1 to 17,
wherein the copolymer B has an aromatic vinyl content of 10 to 70% by mass.

**19.** (Amended) The tire according to any one of claims 1 to 18,
wherein the tire component is a tread.

## Patentansprüche

**1.** Reifen, umfassend eine Reifenkomponente, die eine Kautschukzusammensetzung umfasst, wobei die Kautschukzusammensetzung umfasst:

mindestens ein aromatisches Vinyl-Dien-Olefin-Copolymer A, das einen aromatischen Vinylgehalt von 1 bis 45 Massenprozent, einen Diengehalt von 0,1 bis 50 Massenprozent und einen Olefingehalt von 30 bis 90 Massenprozent aufweist; und
mindestens ein aromatisches Vinyl-Dien-Blockcopolymer B.

2. Reifen nach Anspruch 1,

wobei das Copolymer A mindestens ein aromatisches-Vinyl-Dien-Olefin-Copolymer ist, das einen aromatischen Vinylgehalt von 1 bis 45 Massenprozent, einen Butadiengehalt von 0,1 bis 50 Massenprozent und einen Gesamtgehalt an Ethylen und Butylen von 30 bis 90 Massenprozent aufweist,
das Copolymer B mindestens ein Styrol-Butadien-Blockcopolymer ist,
das mindestens eine Copolymer B in einer Menge von 5 bis 100 Massenteilen pro 100 Massenteile des mindestens einen Copolymers A in der Kautschukzusammensetzung vorhanden ist, und
die Kautschukzusammensetzung, bezogen auf 100 Massenprozent an Kautschukkomponenten darin, insgesamt 40 bis 100 Massenprozent der Copolymere A und B umfasst.

3. Reifen nach Anspruch 2,
wobei das Styrol-Butadien-Blockcopolymer einen Hydrierungsgrad eines Butadienanteils von 50 bis 99 Massenprozent aufweist.

4. Reifen nach Anspruch 2 oder 3,
wobei ein Rückgrat und/oder Kettenende des Styrol-Butadien-Blockcopolymers modifiziert ist.

5. Reifen nach einem der Ansprüche 2 bis 4,
wobei das Styrol-Butadien-Blockcopolymer mindestens ein durch Kondensation eines Styrol-Butadien-Diblockcopolymers erhaltenes Tetramer ist.

6. Reifen nach einem der Ansprüche 1 bis 5,
wobei ein Rückgrat und/oder Kettenende des Copolymers A modifiziert ist.

7. Reifen nach einem der Ansprüche 1 bis 6,

wobei die Kautschukzusammensetzung mindestens ein Vernetzungsmittel umfasst, das aus der Gruppe bestehend aus organischen Peroxiden, durch die folgende Formel (1) dargestellten Verbindungen und Alkylphenol/Schwefelchlorid-Kondensaten ausgewählt ist,

$$R^1\text{-S-S-A-S-S-}R^2 \qquad (1)$$

wobei A eine C2-C10-Alkylengruppe darstellt, und $R^1$ und $R^2$ gleich oder voneinander verschieden sind und jeweils eine Stickstoffatom-haltige einwertige organische Gruppe darstellen.

8. Reifen nach Anspruch 7,
wobei die Kautschukzusammensetzung mindestens ein Metallcarboxylat umfasst.

9. Reifen nach Anspruch 8,
wobei das Metallcarboxylat gebildet ist aus:

mindestens einer Carbonsäure, die ausgewählt ist aus der Gruppe bestehend aus Methacrylsäure, Ethacrynsäure, Acrylsäure, Zimtsäure, Crotonsäure, Maleinsäure, Fumarsäure und Itaconsäure; und
mindestens einem Metall, das ausgewählt ist aus der Gruppe bestehend aus Natrium, Kalium, Eisen, Magnesium, Calcium, Zink, Barium, Aluminium, Zinn, Zirkonium, Lithium, Cadmium und Cobalt.

10. Reifen nach einem der Ansprüche 1 bis 9,
wobei ein Vinyleinheiten-Gehalt bezogen auf insgesamt 100 Massenprozent an Butadieneinheiten der Copolymere A und B 30 Massenprozent oder weniger beträgt.

11. Reifen nach einem der Ansprüche 1 bis 9,
wobei ein Vinyleinheiten-Gehalt bezogen auf insgesamt 100 Massenprozent an Butadieneinheiten der Copolymere A und B 20 Massenprozent oder weniger beträgt.

12. Reifen nach einem der Ansprüche 1 bis 11,
wobei die Kautschukzusammensetzung, bezogen auf 100 Massenprozent an Kautschukkomponenten darin, insgesamt 80 bis 100 Massenprozent der Copolymere A und B umfasst.

**13.** Reifen nach einem der Ansprüche 1 bis 12,
wobei die Kautschukzusammensetzung, pro 100 Massenteile an Kautschukkomponenten darin, 0,5 bis 500 Massenteile mindestens eines anorganischen Füllstoffes umfasst.

**14.** Reifen nach einem der Ansprüche 1 bis 12,
wobei die Kautschukzusammensetzung, pro 100 Massenteile an Kautschukkomponenten darin, 0,5 bis 100 Massenteile mindestens eines Rußes umfasst.

**15.** Reifen nach einem der Ansprüche 1 bis 12,
wobei die Kautschukzusammensetzung im Wesentlichen keinen weißen Füllstoff umfasst.

**16.** Reifen nach einem der Ansprüche 1 bis 15,
wobei die Kautschukzusammensetzung, pro 100 Massenteile an Kautschukkomponenten darin, 0,5 bis 200 Massenteile mindestens eines Weichmachers umfasst.

**17.** Reifen nach einem der Ansprüche 1 bis 15,
wobei die Kautschukzusammensetzung, pro 100 Massenteile an Kautschukkomponenten darin, 0 bis 10 Massenteile mindestens eines Weichmachers umfasst.

**18.** Reifen nach einem der Ansprüche 1 bis 17,
wobei das Copolymer B einen aromatischen Vinylgehalt von 10 bis 70 Massenprozent aufweist.

**19.** Reifen nach einem der Ansprüche 1 bis 18,
wobei die Reifenkomponente ein Laufstreifen ist.

## Revendications

**1.** (modifiée) Pneu, comprenant un composant de pneu comprenant une composition de caoutchouc, la composition de caoutchouc comprenant :
au moins un copolymère vinyle diène oléfinique aromatique A ayant une teneur en vinyle aromatique de 1 à 45 % en masse, une teneur en diène de 0,1 à 50 % en masse, et une teneur en oléfine de 30 à 90 % en masse ; et au moins un copolymère vinyle diène aromatique séquencé B.

**2.** (modifiée) Pneu selon la revendication 1, dans lequel le copolymère A est au moins un copolymère vinyle diène oléfinique aromatique ayant une teneur en vinyle aromatique de 1 à 45 % en masse, une teneur en butadiène de 0,1 à 50 % en masse, et une teneur combinée d'éthylène et de butylène de 30 à 90 % en masse,

le copolymère B est au moins un copolymère séquencé styrène butadiène, l'au moins un copolymère B est présent dans une quantité de 5 à 100 parties en masse pour 100 parties en masse de l'au moins un copolymère A dans la composition de caoutchouc, et
la composition de caoutchouc comprend, sur la base de 100 % en masse de composants de caoutchouc y étant contenus, de 40 à 100 % en masse au total de copolymères A et B.

**3.** (modifiée) Pneu selon la revendication 2, dans lequel le copolymère séquencé styrène butadiène a un degré d'hydrogénation d'une partie butadiène de 50 à 99 % en masse.

**4.** (modifiée) Pneu selon la revendication 2 ou la revendication 3, dans lequel un squelette et/ou une extrémité de chaine du copolymère séquencé styrène butadiène est modifié(e).

**5.** (modifiée) Pneu selon l'une quelconque des revendications 2 à 4,
dans lequel le copolymère séquencé styrène butadiène est au moins un tétramère obtenu par condensation d'un copolymère bi séquencé styrène butadiène.

**6.** (modifiée) Pneu selon l'une quelconque des revendications 1 à 5,
dans lequel un squelette et/ou une extrémité de chaine du copolymère A est modifié(e).

**7.** (modifiée) Pneu selon l'une quelconque des revendications 1 à 6,

dans lequel la composition de caoutchouc comprend au moins un agent de réticulation choisi dans le groupe constitué de peroxydes organiques, de composés représentés par la formule suivante (1), et de produits de condensation d'alkyl phénol et de chlorure de soufre,

$$R^1\text{-S-S-A-S-S-}R^2 \qquad (1)$$

dans lequel A représente un groupement alcylène en C2 à C10, et R1 et R2 sont identiques ou différents l'un de l'autre et représentent chacun un groupement organique monovalent contenant un atome d'azote.

**8.** (modifiée) Pneu selon la revendication 7, dans lequel la composition de caoutchouc comprend au moins un carboxylate métallique.

**9.** (modifiée) Pneu selon la revendication 8, dans lequel le carboxylate métallique est formé :

d'au moins un acide carboxylique choisi dans le groupe constitué de l'acide méthacrylique, de l'acide éthacrynique, de l'acide acrylique, de l'acide cinnamique, de l'acide crotonique, de l'acide maléique, de l'acide fumarique et de l'acide itaconique ; et
d'au moins un métal choisi dans le groupe constitué du sodium, du potassium, du fer, du magnésium, du calcium, du zinc, du baryum, de l'aluminium, de l'étain, du zirconium, du lithium, du cadmium et du cobalt.

**10.** (modifiée) Pneu selon l'une quelconque des revendications 1 à 9, dans lequel une teneur en unités vinyle sur la base de 100 % en masse dans le total des unités butadiène des copolymères A et B est de 30 % en masse ou moins.

**11.** (modifiée) Pneu selon l'une quelconque des revendications 1 à 9, dans lequel une teneur en unités vinyle sur la base de 100 % en masse dans le total des unités butadiène des copolymères A et B est de 20 % en masse ou moins.

**12.** (modifiée) Pneu selon l'une quelconque des revendications 1 à 11, dans lequel la composition de caoutchouc comprend, sur la base de 100 % en masse de composants de caoutchouc y étant contenus, de 80 à 100 % en masse dans le total des copolymères A et B.

**13.** (modifiée) Pneu selon l'une quelconque des revendications 1 à 12, dans lequel la composition de caoutchouc comprend, pour 100 parties en masse de composants de caoutchouc y étant contenus, de 0,5 à 500 parties en masse d'au moins d'une charge inorganique.

**14.** (modifiée) Pneu selon l'une quelconque des revendications 1 à 12, dans lequel la composition de caoutchouc comprend, pour 100 parties en masse de composants de caoutchouc y étant contenus, de 0,5 à 100 parties en masse d'au moins un noir de carbone.

**15.** (modifiée) Pneu selon l'une quelconque des revendications 1 à 12, dans lequel la composition de caoutchouc ne comprend essentiellement aucune charge blanche.

**16.** (modifiée) Pneu selon l'une quelconque des revendications 1 à 15, dans lequel la composition de caoutchouc comprend, pour 100 parties en masse de composants de caoutchouc y étant contenus, de 0,5 à 200 parties en masse d'au moins un plastifiant.

**17.** (modifiée) Pneu selon l'une quelconque des revendications 1 à 15, dans lequel la composition de caoutchouc comprend, pour 100 parties en masse de composants de caoutchouc y étant contenus, de 0 à 10 parties en masse d'au moins un plastifiant.

**18.** (modifiée) Pneu selon l'une quelconque des revendications 1 à 17, dans lequel le copolymère B a une teneur en vinyle aromatique de 10 à 70 % en masse.

**19.** (modifiée) Pneu selon l'une quelconque des revendications 1 à 18, dans lequel le composant de pneu est une bande de roulement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014506277 T
- JP 2005220313 A
- JP 2014105293 A
- JP 4088258 B
- JP 2014105238 A
- JP 2014133845 A
- JP H1275605 A
- JP H5271326 A
- JP H5271325 A
- JP H5222115 A
- JP H11292924 A
- JP 2000037632 A
- JP S59133203 A
- JP S635401 A
- JP S62218403 A
- JP H790017 A
- JP S4319960 B
- JP S4740473 B
- JP 6267419 B
- JP 6208422 B
- JP 6208428 B


### Non-patent literature cited in the description


- Rubber, unvulcanized - Physical property - Part 1: Determination of Mooney viscosity and pre-vulcanization characteristics with Mooney viscometer. *JIS K 6300-1*